# EUROPEAN PATENT SPECIFICATION

(11) **EP 2 350 912 B1**
(45) Date of publication and mention of the grant of the patent: **08.01.2020**
(21) Application number: 08805227.9
(22) Date of filing: 10.10.2008
(51) Int. Cl.: G06F 21/30, G06Q 10/08, G06F 16/955

(54) **METHOD FOR AUTHENTICATING A PRODUCT IN A CONTAINER, AND ASSOCIATED METHOD FOR VERIFYING THE AUTHENTICITY OF THE PRODUCT AND ITS CONTAINER**
VERFAHREN ZUM AUTHENTIFIZIEREN EINES PRODUKTS IN EINEM BEHÄLTER UND DIESBEZÜGLICHES VERFAHREN ZUM VERIFIZIEREN DER AUTHENTIZITÄT DES PRODUKTS UND SEINES BEHÄLTERS
PROCÉDÉ D'AUTHENTIFICATION D'UN PRODUIT PRÉSENT DANS UN CONTENANT, ET PROCÉDÉ ASSOCIÉ POUR VÉRIFIER L'AUTHENTICITÉ DU PRODUIT ET SON CONTENANT

(43) Date of publication of application: 03.08.2011
(60) Divisional application: 19207998.6
(73) Proprietor: OI Europe Sàrl, 1030 Bussigny-près-Lausanne (CH)
(72) Inventor: DANGMANN, Olivier, F-69400 Villefranche sur Saône (FR); DESHERAUD, Gilles, F-69009 Lyon (FR)
(74) Representative: Mergel, Volker
(86) International application number: PCT/EP2008/063634
(87) International publication number: WO 2010/040415

(56) References cited:
- US-A1- 2003 070 394
- US-A1- 2003 116 629
- US-A1- 2005 218 126
- US-A1- 2008 197 969
- ANONYMOUS: "Une technologie de rupture proposée par Prooftag: Le Code à Bulles" INTERNET ARTICLE, [Online] 23 October 2007 (2007-10-23), pages 1-28, XP002536676 Toulouse Retrieved from the Internet: URL:http://www.laas.fr/Club-Affilies/docum ents/Journee-FRID-23-10-07/presentation-RF ID/Prooftag.pdf> [retrieved on 2009-07-13]
- SOPHIE KEVANY: "Prooftag: fraud-proof seal to combat fake wine" DECANTER.COM, [Online] 14 September 2007 (2007-09-14), pages 1-2, XP002536677 Retrieved from the Internet: URL:http://www.decanter.com/news/143233.ht ml> [retrieved on 2009-07-13]
- ANONYMOUS: "Prooftag, a New Way to Combat Wine Fraud" SERIOUS ABOUT WINE, [Online] 29 September 2007 (2007-09-29), XP002536678 Retrieved from the Internet: URL:http://www.seriousaboutwine.co.za/?p=4 47> [retrieved on 2009-07-13]

## Description

The present invention relates to the general technical field of product authentication and traceability.

The invention finds a dedicated application in the packaging of high value liquid products, particularly wines, spirits and fragrances, which are increasingly subject to counterfeiting, either by repackaging (or re-filling) from original containers into fake ones or by the replacement of genuine products by counterfeit products in original or fake containers.

Various methods and technologies have already been proposed and implemented to improve traceability and/or authenticity of liquid products packaged (or filled) in bottles. These methods generally involve fixing a label to the neck, cork or capsule of a bottle containing a product, the label bearing a traceability or authenticity code, or a device (electronic chip) enabling authentication of the packaged product from the producer to the final consumer. The label is designed and positioned on the bottle such that it must be broken, or at least altered, for the bottle to be opened and the product made usable.

Other methods involve printing or engraving an authentication or traceability code directly into the bottle material to at least authenticate the container itself.

Such methods allow authentication of a product and/or its container as long as both are original from their production to selling to the final user without repackaging. However, a situation may arise in which the originally packaged product is already a fake product. Or a genuine product may have been repackaged between production and sale. In such case, the product will often become completely untraceable for the final consumer, whose safety may therefore be at risk if the product and/or its container are counterfeit.

US 2003/0070394 A1 describes a system for printing pharmaceutical product package labels which avoids inaccurate labeling of the product package in an automated pharmaceutical product package system. However, this system is to avoid errors in labeling of pharmaceutical packages and does not solve problems associated with counterfeiting and faking products/containers.

The U.S. Patent Application Publication US 2003/0116629 A1 describes a bar code arrangement allowing for determining positions along an axis. It includes a plurality of bar code symbols, each having start and stop end characters and encoded data therebetween. Scanning the bar code symbol corresponding to a particular position among the plurality of bar code symbols in the column may allow identification of the particular position along the axis. In another embodiment in the form of a ribbon, this bar code arrangement may detect a liquid level on a bottle of liquid.

There is consequently a need for a new authentication method, by which both the authenticity and the traceability of a product and its container can be ensured by producers to the consumers.

There is also a need for an authentication method which improves prevention of counterfeiting of the packaged product by repackaging or replacement of the genuine product.

These aims are satisfied, according to a first aspect of the present invention, by a method for enabling authentication of a product conditioned in a container, and of said container, according to claim 1.

The method of the invention provides a complete and totally secure solution for authenticating and tracing a product from production to the end consumer. It enables a separate authentication of the product and its container by means of first and second authentication means from which first and second authentication keys are extracted respectively and recorded in two separate databases. Each associated pair of first and second authentication keys is then secured by a third authentication key derived by a computer program from the said first and second authentication keys.

Through the method of the invention it is now possible to ensure that the associated pair formed by a product and its container is genuine, and that neither the product nor the container has been counterfeited. Indeed, the three separate authentication keys provide three different security levels which must be satisfied to guarantee the authenticity of the product and its container.

Furthermore, the container for the packaged product is a glass or crystal container, and the first authentication means is laser engraved into the container at the "hot end" of the manufacturing process. Thus, the first authentication means is virtually impossible to copy or falsify.

According to another preferred embodiment of the method of the invention, the first and second authentication means are optically readable. This facilitates the checking and reading of the authentication means throughout the production and marketing of the packaged product.

To further improve the level of security of the method of the invention against counterfeiting, it is particularly advantageous that the second authentication means comprise at least a two dimensional random code from which said second authentication key is optically extracted.

Furthermore, the second authentication means may advantageously comprise at least a three dimensional random physical signature from which said second authentication key is optically extracted. In this instance, the three- dimensional random physical signature is preferably implemented such that it is visible on a label applied to the container.

Furthermore, the three-dimensional random physical signature is, according to the invention, randomly generated into a transparent material, which can be, for instance, a thermosetting polymer.

In another preferred embodiment of the invention, the container label comprises a tamper evident film and is applied on to said container as an opening seal.

According to the invention, the second authentication means advantageously also comprises a traceability code.

In a preferred embodiment of the invention, the first authentication means comprises a Datamatrix code, and the second authentication means comprises a bubble tag.

In a further preferred embodiment of the invention, the first, second and third authentication keys each comprise a numerical or alphanumerical code.

In a second aspect, the present invention also relates to a method of verifying the authenticity and genuineness of a product packaged in a container, the container and the product being individually enabled for authentication by the first and second authentication means respectively, according to the method previously described.

Such a verifying method includes at least the steps of:
a) optically reading the first authentication means for the container by means of an optical reader, said optical reader comprising means for extracting a container authentication key from the optical signal read from said first authentication means and being connected to a first database in which the original first authentication keys of each original authenticated container are recorded,
b) comparing the authentication key extracted by said optical reader with each original first authentication key in the first database, and
c) if the container authentication key extracted by said optical reader corresponds to one of the original first authentication keys recorded in the first database, optically reading the second authentication means for the product packaged into said container with an optical reader, said optical reader comprising means for extracting a product authentication key from the optical signal read from said second authentication means and being connected to a second database into which the original second authentication keys of each original authenticated products are recorded, and
d) comparing the product authentication key extracted by said optical reader with each original second authentication key in the second database, and
e) if the product authentication key extracted by said optical reader corresponds to one of the original second authentication keys recorded in the second database, assessing the authenticity of the associated pair of said container and said product conditioned therein by generating a security authentication key from a computer implemented combination of said container and product authentication keys extracted with said optical reader, and comparing said security authentication key with each said original unique third authentication key recorded into said third database for the authentication key of the associated product container pair, wherein the third authentication key is a unique identifier of the associated first and second authentication key.

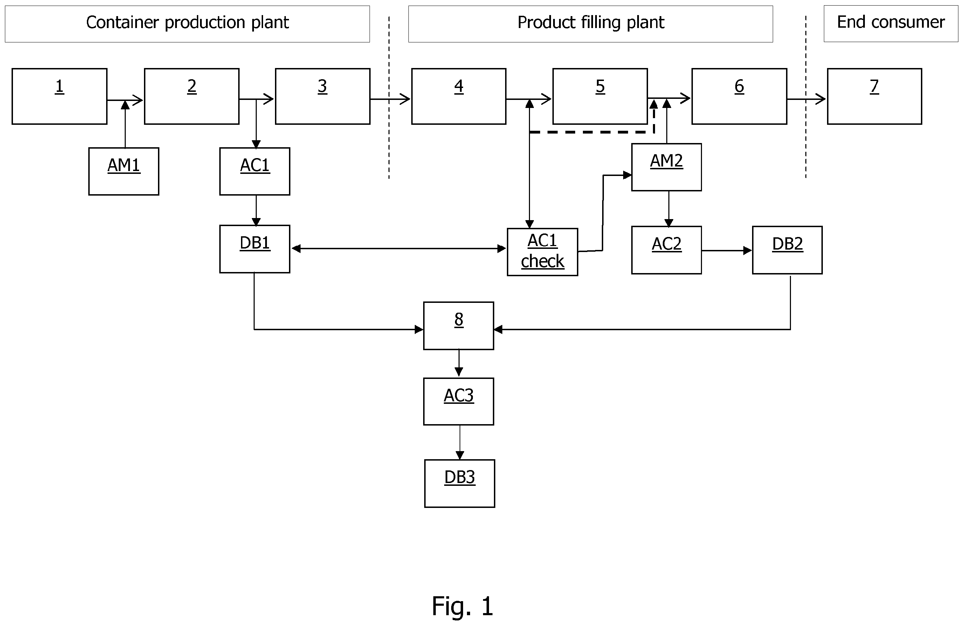

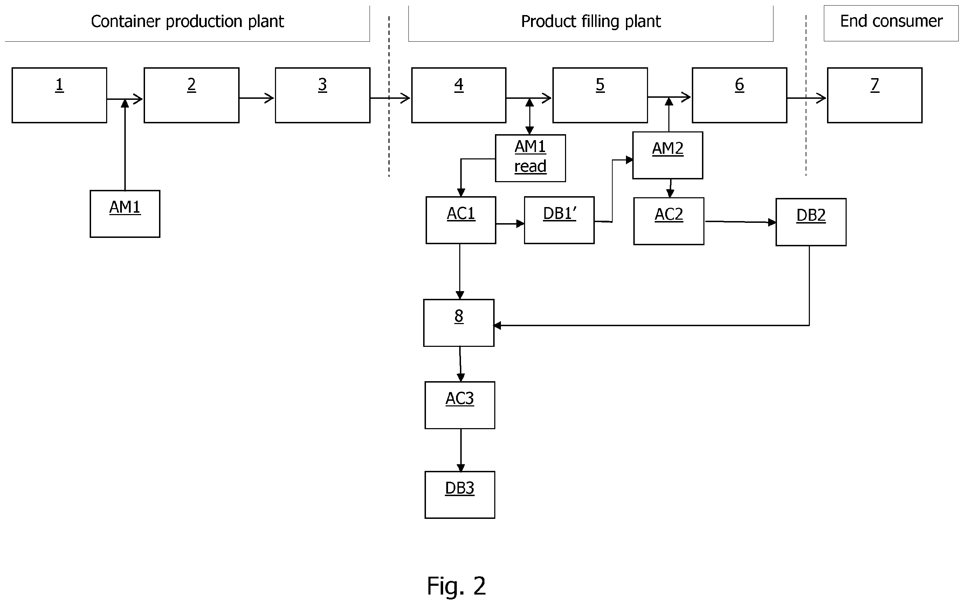

The present invention will now be presented in detail the following description, with reference to Figure 1 and 2 which schematically depict, in block form, the authentication method of the present invention in two preferred implementations.

In the following example, the method of the invention will be described in relation to the authentication of a liquid product such as wine packaged in glass bottles. However, the method of the invention is not limited to the authentication of liquid products, nor to containers made of glass.

According to a first variant of the invention shown in Figure 1, a first step of the authentication process proposed consists in providing a container, for instance a glass bottle for packaging wine, with a first authentication means for authenticating the glass bottle. Thus, at the glass production plant, glass bottles are produced in a row on a bottle forming machine 1 (typically an IS machine) into which glass bottles are molded from a batch of hot melted glass. The bottles, once molded, directly exit the IS machine 1 in a hot state and are laser engraved with a first authentication means AM1 before entering an annealing lehr 2.

According to the invention, the first authentication means AM1 is preferably and advantageously a Datamatrix code, which is laser engraved within the glass material of the bottle directly on exit of the IS machine, ie at hot end.

Such engraving at hot end of a Datamatrix code AM1 may advantageously be carried out by means of a laser engraving system, such as the Laser Hot End Engraving System marketed by MSC Inspection Worldwide company.

The engraving of a Datamatrix code AM1 at hot end into the glass material of the bottles provide a unique identification/authentication code for the bottles. This code comprises all the information required about the section of the IS machine 1 or the mold where a bottle is formed, the date of production as well as the company code, line code and plant code. The bottles formed and engraved at hot end thereby comprise a secure and resistant authentication means AM1, which is unreproducible but easily readable by means of standard optical readers.

It is thus possible to verify the authenticity of the bottles throughout their life, not only within the glass plant during production of the bottles but also after the bottles have left the production plant in the filling plant and then when the filled bottles are released for sale on the market.

After passing the annealing lehr 2, the bottles are then checked, and their Datamatrix code AM1 is read by an in-line optical reader to verify correct engraving of the code into the glass material of the bottles. On reading the said Datamatrix code, a first authentication key AC1 is extracted. This first authentication key AC1 is a numerical or alphanumerical key or code automatically derived by a computer program from the reading of the Datamatrix code engraved into the bottle.

Once obtained, the first authentication key AC1 or code for the bottle, ie for the container, is recorded into a first database DB1, which thereby accumulates the individual authentication key for each bottle produced. It is therefore possible to keep a constant trace of each marked bottle produced so that it can be scanned and identified by simple optical reading of the Datamatrix anywhere after it has been produced. After reading the Datamatrix codes AM1, the bottles are then palletised at stage 3 shown on Figure 1 before being sent to filling plants.

The second step of the authentication method of the invention consists in, after authenticating the bottles by their first authentication means AM1, authenticating the product. In the present example, the product is wine, to be packaged into the authenticated bottles.

The authentication of the packaged product according to the method of the invention includes the step of applying a second authentication means AM2 for the product on to the already authenticated bottles.

To this end, the authenticated bottles are supplied to a filling line 4 where they are filled in a row. After filling, the authentication means AM1 of each bottle thus filled is read a second time by a reading system, which is also connected to the first database DB1 into which the first authentication keys AC1 for the bottles have been recorded. It is thereby checked that all the bottles used for filling the wine are authentic bottles from their provider. Upon successful checking of the first authentication key AC1, the reading system then triggers the application of a second authentication means AM2 for the wine on to the bottle that has just been checked.

Alternatively, the checking of the AC1 code in the filling plant can also be carried out just after the filling and capping of the bottles as represented in Figure 1 by a dashed arrow.

In an other variant shown in Figure 2, it is also be possible to carry out the method of the invention with a first authentication key AC1 which is extracted only at the filling plant by reading of the Datamatrix code AM1 engraved into the bottles directly on the filling line, and recording the first authentication keys AC1 in a first database DB1'. Then, once each first authentication key AC1 has been recorded in database DB1', allocation of a second authentication means AM2 for the bottle that has just been read and filled with wine is triggered.

The second authentication means AM2 preferably comprises a two or three dimensional random code or signature which is formed, printed or otherwise implemented on to a label. The two or three dimensional random code or signature is directly visible and optically readable on the label, which is applied to the bottle after it has been filled with the product, for example the wine, at step 4, and after the bottle has been capped at a capping station 5. As in Figure 1, but not represented in Figure 2, the reading of AM1 and the extraction of AC1 code can occur directly after filling at 4 and capping of the bottles at 5.

In a preferred embodiment of the method of the invention, the second authentication means for the product is a three dimensional random signature implemented on to a label. Such a 3D random signature is a unique and non-reproducible authenticator consisting of a visible 3D structure formed, as preferred in the present invention, by random generation of bubbles within a transparent material such as a thermosetting polymer.

The 3D random signature is visible on said label so that it can be read by dedicated optical means to extract a second authentication key AC2 which is then recorded into a second database DB2 for storing the authentication keys for the wine packaged in the bottles.

Preferably, the authentication key AC2 corresponding to the second authentication means AM2 is extracted or attributed directly by the signature producer once it has been created, and it is printed directly on to the label so that a consumer can use the printed key to verify for himself the authenticity of a wine he bought by entering the authentication key directly on an internet website connected to the second authentication keys database DB2. If the key entered corresponds to one recorded in the database, then the consumer knows that his wine is genuine.

A particularly efficient and secure solution for applying 3D random signatures on to labels is provided by the French company PROOFTAG S.A.S using the BUBBLE TAG® technology, which is the one preferred according to the invention for forming the second authentication means.

The labels bearing the 3D random signature for authentication of the wine filled in the bottles are preferably stuck on to the neck of the bottles to form an opening seal. To this end, the labels may advantageously comprise a tamper evident film applied to the neck of each bottle, and at least partially over the cap of each bottles. The labels bearing the 3D random signature may also preferably comprise a traceability code such as a Datamatrix code.

Alternatively, the label bearing the bubble tag may also be inserted within the cap of the bottle and retracted on to the neck of the bottle after filling and corking of the bottle.

Therefore, by using Datamatrix codes AM1 engraved into the bottles at hot end, and by using 3D tags AM2 implemented on to labels applied onto the necks of the bottles after filling and closing the bottles, both the bottles and the wine therein are individually authenticated and authenticable.

The bottles are then packaged at a packaging station 6 and sent to retailers for sale to the end consumers 7.

The method of the invention further comprises a third step for authenticating the associated pair formed by the wine and its bottle to ensure that, even if the wine and the bottle are both genuine, they correspond exactly to an original associated pair as it was originally formed in the production plant, and that no separation or alteration of either the container or the product packaged therein has occurred between production and sale to the end consumer.

For this reason, the method of the invention comprises a third step in which a third authentication key AC3 for authenticating the associated pair formed by the product, eg wine, and its container, eg a bottle, is generated from a computer implemented combination of said first and second authentication keys, said third authentication key being recorded in a third database DB3.

Practically, in the depicted example, when the wine is filled into a bottle and said bottle is closed and authenticated by the application of a label with a 3D tag, the first and second authentication keys AC1, AC2 for the bottle and wine are recorded into the databases DB1 and DB2 respectively. Said first and second authentication keys are also entered automatically into a computer system 8 and combined to generate a third, unique authentication key AC3 for the corresponding associated pair of wine and bottle.

The third authentication key AC3 is then recorded into a third database DB3.

This third authentication key is therefore the unique identifier of the associated pair formed by a single authenticable bottle and a single authenticable volume of wine packaged in said bottle.

The method of the invention thus ensures that, from production of a conditioned product, for example a bottle of wine, to its sale to end consumers, each bottle can be tracked, checked and verified to determine the genuineness:
- of the container (eg glass bottle) by reading the first authentication means AM1 applied to said container, to verify said first authentication key AC1,
- of the product (eg wine) packaged in the said container by reading the second authentication means AM2 applied to the container, to verify said second authentication key AC2,
- of the associated container-product pair by combining said first and second authentication keys AC1, AC2 in a computer system to check if said combination corresponds to an identified third authentication key AC3 recorded in said third database DB3.

Thanks to the method of the invention, counterfeiting of an original container, for instance in the present example a glass bottle, can be easily detected, as well as counterfeiting of an original product, as it is almost impossible to obtain a recorded third authentication key without the two original first and second authentication keys AC1, AC2 derived from said first and second authentication means AM1, AM2 of an original associated container-product pair.

As a consequence, if either the container or the product is faked or altered, the authentication means will certainly also be faked or altered and therefore it will be impossible to generate the third authentication key AC3 required to 100% authenticate the associated container-product pair.

The present invention also relates to a method for verifying the authenticity and genuineness of a product conditioned in a container (such as wine in a glass bottle in the present example), said container and said product being individually authenticated by first and second authentication means AM1, AM2 respectively according to the authentication method of the invention as previously described.

The verifying method of the invention includes the following steps:
a) optically reading said first authentication means AM1 for the container by means of an optical reader, said optical reader comprising means for extracting a container authentication key from the optical signal read from said first authentication means and being connected to a first database DB1 into which the original first authentication keys AC1 of each original authenticated container are recorded,
b) comparing the authentication key extracted by said optical reader with each original first authentication key AC1 in the first database, and
c) if the container authentication key extracted by said optical reader corresponds to one of the original first authentication keys AC1 recorded in the first database DB1, optically reading said second authentication means AM2 for the product packaged into said container with an optical reader, said optical reader comprising means for extracting a product authentication key from the optical signal read from said second authentication means and being connected to a second database DB2 into which the original second authentication keys AC2 of each original authenticated products are recorded, and
d) comparing the product authentication key extracted by said optical reader with each original second authentication key AC2 in the second database DB2, and
e) if the product authentication key extracted by said optical reader corresponds to one of the original second authentication keys AC2 recorded in the second database DB2, assessing the authenticity of the associated pair of said container and said product conditioned therein by generating a security authentication key from a computer implemented combination of said container and product authentication keys extracted by said first and second optical readers, and comparing said security authentication key with each said original third authentication keys AC3 recorded into said third database DB3 for the authentication key of the associated product-container pair.

## Claims

1. A method of enabling authentication of a product in a glass or crystal container, and enabling authentication of the container itself, which includes the steps of:
(a) applying to the container a first authentication means (AM1) for ensuring authenticity of the container,
(b) obtaining a first authentication key (AC1) from said first authentication means and recording said first authentication key in a first database (DB1, DB1'),
(c) applying to the container a second authentication means (AM2) independent of said first authentication means for ensuring authenticity and genuineness of the product in the container,
(d) obtaining a second authentication key (AC2) from said second authentication means and recording said second authentication key in a second database (DB2) separately from said first authentication key,
(e) generating a third authentication key (AC3), for authenticating an associated pair consisting of the product and its container, from a computer implemented combination of said first and second authentication keys (AC1, AC2), and
(f) recording said third authentication key in a third database (DB3); wherein said first authentication means (AM1) is laser engraved into the container in said step (a) at a hot end of a manufacturing process for the container; and
wherein the third authentication key is a unique identifier of the associated first and second authentication key.

2. A method according to claim 1 wherein said first and second authentication means (AM1, AM2) are optically readable.

3. A method according to one of claims 1 or 2 wherein said second authentication means (AM2) includes a two dimensional random code from which said second authentication key (AC2) is optically read in said step (d).

4. A method according to one of claims 1 to 2 wherein said second authentication means (AM2) includes a three dimensional random physical signature from which said second authentication key (AC2) is optically read in said step (d).

5. A method according to claim 4 wherein said random three dimensional physical signature is implemented and visible on a label applied to the container in said step (c).

6. A method according to claim 4 or 5 wherein said random three dimensional physical signature is randomly generated into a transparent material and applied to the container in said step (c).

7. A method according to claim 6 wherein said transparent material is a thermosetting polymer.

8. A method according to one of claims 5 to 7 wherein said label includes a tamper evident film and is applied to the container as an opening seal.

9. A method according to one of claims 1 to 8 wherein said second authentication means (AM2) includes a traceability code.

10. A method according to one of claims 1 to 7 wherein said first authentication means (AM1) includes a Datamatrix code and said second authentication means (AM2) includes a bubble tag.

11. A method according to one of claims 1 to 8 wherein said first, second and third authentication keys (AC1, AC2, AC3) each include a numeric or alphanumeric code.

12. A method of verifying the authenticity and genuineness of a product in a glass or crystal container, the container and the product being individually enabled for authentication in accordance with the method set forth in any of claims 1 to 11, the method including the steps of:
optically reading the first authentication means (AM1) for the container by means of a first optical reader, said first optical reader including means for extracting a container authentication key from an optical signal read from said first authentication means and being connected to a first database (DB1, DB1') in which original first authentication keys (AC1) of each original authentication container are recorded,
comparing the authentication key obtained by said first optical reader in said step (a) with each original authentication key (AC1) in the first database,
if the container authentication key read by said optical reader corresponds to a first authentication key (AC1) recorded in the first database (DB1, DB1'), optically reading the second authentication means (AM2) for the product packaged in the container with a second optical reader, said optical reader including means for obtaining a product authentication key from an optical signal read from said second authentication means and being connected to a second database (DB2) in which original second authentication keys (AC2) of each original authenticated product are recorded,
comparing the product authentication key obtained by said second optical reader with each original second authentication key (AC2) in the second database (DB2), and
if the product authentication key obtained by said second optical reader corresponds to a second authentication key (AC2) recorded in the second database, assessing authenticity of an associated pair consisting of the container and the product packaged in the container, by:
- generating a security authentication key from a computer implemented combination of said container and product authentication keys extracted by said optical readers, and
- comparing said security authentication key with third authentication keys (AC3) recorded in a third database (DB3) as the unique authentication keys of associated product-container pairs, wherein the third authentication key is a unique identifier of the associated first and second authentication key.

## Patentansprüche

1. Verfahren zum Ermöglichen der Authentifizierung eines Produkts in einem Glas- oder Kristallbehäfter und zum Ermöglichen der Authentifizierung des Behälters selbst, mit folgenden Schritten:
(a) Aufbringen eines ersten Authentifizierungsmittels (AM1) auf den Behälter, um die Authentizität des Behälters sicherzustellen,
(b) Erhalten eines ersten Authentifizierungsschlüssels (AC1) von dem ersten Authentifizierungsmittel und Aufzeichnen des ersten Authentifizierungsschlüssels in einer ersten Datenbank (DB1, DB1'),
(c) Aufbringen eines von dem ersten Authentifizierungsmittel unabhängigen zweiten Authentifizierungsmittels (AM2) auf den Behälter, um die Authentizität und Echtheit des Produkts in dem Behälter sicherzustellen,
(d) Erhalten eines zweiten Authentifizierungsschlüssels (AC2) von dem zweiten Authentifizierungsmittel und Aufzeichnen des zweiten Authentifizierungsschlüssels in einer zweiten Datenbank (DB2) getrennt von dem ersten Authentifizierungsschlüssel,
(e) Erzeugen eines dritten Authentifizierungsschlüssels (AC3) zum Authentifizieren eines verknüpften Paares bestehend aus dem Produkt und dessen Behälter, aus einer computerimplementierten Kombination des ersten und des zweiten Authentifizierungsschlüssels (AC1, AC2) und
(f) Aufzeichnen des dritten Authentifizierungsschlüssels in einer dritten Datenbank (DB3),
wobei das erste Authentifizierungsmittel (AM1) in Schritt (a) am heißen Ende eines Herstellungsprozesses für den Behälter lasergraviert wird, und
wobei der dritte Authentifizierungsschlüssel eine eindeutige Kennung des verknüpften ersten und zweiten Authentifizierungsschlüssels ist.

2. Verfahren nach Anspruch 1, wobei das erste und das zweite Authentifizierungsmittel (AM1, AM2) optisch auslesbar sind.

3. Verfahren nach einem der Ansprüche 1 oder 2, wobei das zweite Authentifizierungsmittel (AM2) einen zweidimensionalen Zufallscode umfasst, aus dem der zweite Authentifizierungsschlüssel (AC2) in Schritt (d) optisch ausgelesen wird.

4. Verfahren nach einem der Ansprüche 1 bis 2, wobei das zweite Authentifizierungsmittel (AM2) eine dreidimensionale physische Zufallssignatur umfasst, aus welcher der zweite Authentifizierungsschlüssel (AC2) in Schritt (d) optisch ausgelesen wird.

5. Verfahren nach Anspruch 4, wobei die dreidimensionale physische Zufallssignatur auf einem Etikett realisiert und sichtbar ist, das in Schritt (c) an dem Behälter angebracht wird.

6. Verfahren nach Anspruch 4 oder 5, wobei die dreidimensionale physische Zufallssignatur stochastisch in einem transparenten Material erzeugt wird und in Schritt (c) an dem Behälter angebracht wird.

7. Verfahren nach Anspruch 6, wobei das transparente Material ein wärmehärtendes Polymer ist.

8. Verfahren nach einem der Ansprüche 5 bis 7, wobei das Etikett eine Originalitätssicherungsfolie umfasst und als Öffnungssiegel an dem Behälter angebracht wird.

9. Verfahren nach einem der Ansprüche 1 bis 8, wobei das zweite Authentifizierungsmittel (AM2) einen Rückverfolgbarkeitscode umfasst.

10. Verfahren nach einem der Ansprüche 1 bis 7, wobei das erste Authentifizierungsmittel (AM1) einen DataMatrix-Code umfasst und das zweite Authentifizierungsmittel (AM2) ein Bubble-Tag-Etikett umfasst.

11. Verfahren nach einem der Ansprüche 1 bis 8, wobei der erste, zweite und dritte Authentifizierungsschlüssel (AC1, AC2, AC3) jeweils einen numerischen oder alphanumerischen Code umfassen.

12. Verfahren zum Verifizieren der Authentizität und Echtheit eines Produkts in einem Glas- oder Kristallbehälter, wobei eine Authentifizierung des Behälters und des Produkts einzeln gemäß dem Verfahren nach einem der Ansprüche 1 bis 11 ermöglicht ist, wobei das Verfahren folgende Schritte umfasst:
optisches Auslesen des ersten Authentifizierungsmittels (AM1) für den Container mittels eines ersten optischen Lesegeräts, wobei das erste optische Lesegerät Mittel zum Extrahieren eines Behälterauthentifizierungsschlüssels aus einem von dem ersten Authentifizierungsmittel ausgelesenen optischen Signal umfasst und mit einer ersten Datenbank (DB1, DB1') verbunden ist, in der originale erste Authentifizierungsschlüssel (AC1) für jeden originalen Authentifizierungsbehälter aufgezeichnet sind,
Vergleichen des mittels des ersten optischen Lesegeräts in Schritt (a) erhaltenen Authentifizierungsschlüssels mit jedem originalen Authentifizierungsschlüssel (AC1) in der ersten Datenbank,
wenn der von dem optischen Lesegerät ausgelesene Behälterauthentifizierungsschlüssel mit einem in der ersten Datenbank (DB1, DB1') aufgezeichneten ersten Authentifizierungsschlüssel (AC1) übereinstimmt, optisches Auslesen des zweiten Authentifizierungsmittels (AM2) für das in dem Behälter verpackte Produkt mittels eines zweiten optischen Lesergeräts, wobei das optische Lesegerät Mittel zum Erhalten eines Produktauthentifizierungsschlüssels aus einem von dem zweiten Authentifizierungsmittel ausgelesenen optischen Signal umfasst und mit einer zweiten Datenbank (DB2) verbunden ist, in der originale zweite Authentifizierungsschlüssel (AC2) für jedes originale authentifizierte Produkt aufgezeichnet sind,
Vergleichen des mittels des zweiten optischen Lesegeräts erhaltenen Produktauthentifizierungsschlüssels mit jedem originalen zweiten Authentifizierungsschlüssel (AC2) in der zweiten Datenbank (DB2) und
wenn der mittels des zweiten optischen Lesegeräts erhaltene Produktauthentifizierungsschlüssel mit einem in der zweiten Datenbank aufgezeichneten zweiten Authentifizierungsschlüssel (AC2) übereinstimmt, Beurteilen der Authentizität eines verknüpften Paares bestehend aus dem Behälter und dem in dem Behälter verpackten Produkt durch:
- Erzeugen eines Sicherheitsauthentifizierungsschlüssels aus einer computerimplementierten Kombination der mittels der optischen Lesegeräte extrahierten Authentifizierungsschlüssel für den Behälter und das Produkt und
- Vergleichen des Sicherheitsauthentifizierungsschlüssels mit dritten Authentifizierungsschlüsseln (AC3), die in einer dritten Datenbank (DB3) als eindeutige Authentifizierungsschlüssel für verknüpfte Produkt-Behälter-Paare aufgezeichnet sind, wobei der dritte Authentifizierungsschlüssel eine eindeutige Kennung des verknüpften ersten und zweiten Authentifizierungsschlüssels ist.

## Revendications

1. Procédé permettant l'authentification d'un produit dans un contenant en verre ou en cristal et permettant l'authentification du contenant lui-même, qui comporte les étapes, consistant à :
(a) appliquer au contenant un premier moyen d'authentification (AM1), pour assurer l'authenticité du contenant,
(b) obtenir une première clé d'authentification (AC1) de la part dudit premier moyen d'authentification et enregistrer ladite première clé d'authentification dans une première base de données (DB1, DB1'),
(c) appliquer au contenant un deuxième moyen d'authentification (AM2), indépendant dudit premier moyen d'authentification, pour assurer l'authenticité et l'originalité du produit dans le contenant,
(d) obtenir une deuxième clé d'authentification (AC2) de la part dudit deuxième moyen d'authentification et enregistrer ladite deuxième clé d'authentification dans une deuxième base de données (DB2), séparément de ladite première clé d'authentification,
(e) générer une troisième clé d'authentification (AC3), pour authentifier une paire associée, se composant du produit et de son contenant, à partir d'une combinaison, mise en œuvre par ordinateur, desdites première et deuxième clés d'authentification (AC1, AC2) et
(f) enregistrer ladite troisième clé d'authentification dans une troisième base de données (DB3) ;
dans lequel ledit premier moyen d'authentification (AM1) est gravé au laser dans le contenant au cours de ladite étape (a) à une extrémité chaude d'un processus de fabrication du contenant et
dans lequel la troisième clé d'authentification est un identifiant unique des première et deuxième clés d'authentification associées.

2. Procédé selon la revendication 1, dans lequel lesdits premier et deuxième moyens d'authentification (AM1, AM2) sont lisibles optiquement.

3. Procédé selon l'une des revendications 1 ou 2, dans lequel ledit deuxième moyen d'authentification (AM2) comporte un code aléatoire bidimensionnel, à partir duquel ladite deuxième clé d'authentification (AC2) est lue optiquement au cours de ladite étape (d).

4. Procédé selon l'une des revendications 1 à 2, dans lequel ledit deuxième moyen d'authentification (AM2) comporte une signature physique aléatoire tridimensionnelle, à partir de laquelle ladite deuxième clé d'authentification (AC2) est lue optiquement au cours de ladite étape (d).

5. Procédé selon la revendication 4, dans lequel ladite signature physique tridimensionnelle aléatoire est mise en œuvre et visible sur une étiquette, appliquée au contenant au cours de ladite étape (c).

6. Procédé selon la revendication 4 ou 5, dans lequel ladite signature physique tridimensionnelle aléatoire est générée de manière aléatoire dans un matériau transparent et appliquée au contenant au cours de ladite étape (c).

7. Procédé selon la revendication 6, dans lequel ledit matériau transparent est un polymère thermodurcissable.

8. Procédé selon l'une des revendications 5 à 7, dans lequel ladite étiquette comporte un film d'inviolabilité et est appliquée sur le contenant en tant que joint d'étanchéité d'ouverture.

9. Procédé selon l'une des revendications 1 à 8, dans lequel ledit deuxième moyen d'authentification (AM2) comporte un code de traçabilité.

10. Procédé selon l'une des revendications 1 à 7, dans lequel ledit premier moyen d'authentification (AM1) comporte un code Datamatrix et ledit deuxième moyen d'authentification (AM2) comporte un code à bulles.

11. Procédé selon l'une des revendications 1 à 8, dans lequel lesdites première, deuxième et troisième clés d'authentification (AC1, AC2, AC3) comportent chacune un code numérique ou alphanumérique.

12. Procédé de vérification de l'authenticité et de l'originalité d'un produit, dans un contenant en verre ou en cristal, le contenant et le produit étant validés individuellement pour l'authentification, conformément au procédé, présenté dans l'une quelconque des revendications 1 à 11, le procédé comportant les étapes, consistant à :
lire optiquement le premier moyen d'authentification (AM1) pour le contenant, au moyen d'un premier lecteur optique, ledit premier lecteur optique comportant un moyen, destiné à extraire une clé d'authentification de contenant, à partir d'un signal optique, lu par ledit premier moyen d'authentification et étant connecté à une première base de données (DB1, DB1'), dans laquelle sont enregistrées les premières clés d'authentification d'origine (AC1) de chaque contenant d'authentification d'origine,
comparer la clé d'authentification, obtenue par ledit premier lecteur optique au cours de ladite étape (a), avec chaque clé d'authentification d'origine (AC1) dans la première base de données,
si la clé d'authentification de contenant, lue par ledit lecteur optique, correspond à une première clé d'authentification (AC1), enregistrée dans la première base de données (DB1, DB1'), lire optiquement le deuxième moyen d'authentification (AM2) du produit, emballé dans le contenant avec un second lecteur optique, ledit lecteur optique comportant un moyen, destiné à obtenir une clé d'authentification de produit de la part d'un signal optique, lu par ledit deuxième moyen d'authentification et étant connecté à une deuxième base de données (DB2), dans laquelle sont enregistrées les deuxièmes clés d'authentification d'origine (AC2) de chaque produit, authentifié d'origine,
comparer la clé d'authentification de produit, obtenue par ledit second lecteur optique, avec chaque deuxième clé d'authentification d'origine (AC2) dans la deuxième base de données (DB2) et,
si la clé d'authentification de produit, obtenue par ledit second lecteur optique, correspond à une deuxième clé d'authentification (AC2), enregistrée dans la deuxième base de données, évaluer l'authenticité d'une paire associée, se composant du contenant et du produit, emballé dans le contenant, en :
- générant une clé d'authentification de sécurité à partir d'une combinaison, mise en œuvre par ordinateur, desdites clés d'authentification de contenant et de produit, extraites par lesdits lecteurs optiques et
- comparer ladite clé d'authentification de sécurité avec les troisièmes clés d'authentification (AC3), enregistrées dans une troisième base de données (DB3), en tant que clés d'authentification uniques de paires produit - contenant associées, dans laquelle la troisième clé d'authentification est un identifiant unique des première et deuxième clés d'authentification associées.
